# EUROPÄISCHE PATENTANMELDUNG

(11) **EP 2 110 964 A1**
(43) Veröffentlichungstag der Anmeldung: **21.10.2009**
(21) Anmeldenummer: 09004805.9
(22) Anmeldetag: 01.04.2009
(51) Int. Cl.: H04B 7/08

(54) **Empfängerschaltung, Verwendung und Verfahren zum Empfang in einem Funknetz**

(30) Priorität: 14.04.2008 DE 102008018869
(71) Anmelder: Atmel Automotive GmbH, 74072 Heilbronn (DE)
(72) Erfinder: Hanusch, Thomas, 01640 Coswig (DE); Beyer, Sascha, Dipl.-Ing., 01458 Ottendorf-Okrilla (DE); Ferchland, Tilo, Dipl.-Ing., 01277 Dresden (DE)
(74) Vertreter: Müller, Wolf-Christian

(57) **Zusammenfassung**

Empfängerschaltung, Verwendung und Verfahren zum Empfang in einem Funknetz,
- bei dem zwischen einem ersten Signal (rf10), das über eine erste Antenne (10) empfangen wird, und einem zweiten Signal (rf20), das über eine zweite Antenne (20) empfangen wird, zur Bildung eines Eingangssignals fortlaufend umgeschaltet wird,
- bei dem das Eingangssignal analog-digital in ein Digitalsignal (dig) umgesetzt wird,
- bei dem das Digitalsignal (dig) zur Ausgabe eines Korrelationssignals (s) korreliert wird,
- bei dem das Korrelationssignal (s) mit einer Schwelle (PDT) verglichen wird, und
- bei dem die Umschaltung für einen Datenempfang in einer aktuellen Schaltposition angehalten wird, wenn das Korrelationssignal (s) die Schwelle (PDT) überschreitet.

## Beschreibung

Die vorliegende Erfindung betrifft eine Empfängerschaltung, eine Verwendung und ein Verfahren zum Empfang in einem Funknetz.

Moderne Empfängerschaltungen für Radio-Hochfrequenzsignale zur Verwendung in lokalen Funknetzen zeichnen sich durch eine sehr hohe Empfindlichkeit aus. Unterschiedliche Funknetze auf derselben Sendefrequenz können sich gegenseitig stören. Dies kann mit wachsender Dichte der Funknetze zu immer schlechteren Übertragungsbedingungen führen. Derartige Funknetze sind beispielsweise in den Industrie-Standards IEEE 802.11, IEEE 802.15.1 oder IEEE 802.15.4 beschrieben, die teilweise dieselben Frequenzbänder nutzen.

Der Erfindung liegt die Aufgabe zu Grunde ein möglichst verbessertes Verfahren zum Empfang in einem Funknetz anzugeben.

Diese Aufgabe wird durch das Verfahren mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Verfahren zum Empfang in einem Funknetz vorgesehen. In dem Verfahren wird zwischen einem ersten Signal, das über eine erste Antenne empfangen wird, und einem zweiten Signal, das über eine zweite Antenne empfangen wird, zur Bildung eines Eingangssignals fortlaufend umgeschaltet. Zusätzlich könnte auch eine dritte Antenne mit einem dritten Signal vorgesehen sein, die in den Umschaltungsprozess eingebunden ist. Bei lediglich zwei Antennen wird hingegen abwechselnd geschaltet.

Das Eingangssignal wird analog-digital in ein Digitalsignal umgesetzt. Vor der Analog-Digital-Umsetzung ist vorzugsweise noch eine Filterung und/oder Verstärkung vorgesehen.

Das Digitalsignal wird zur Ausgabe eines Korrelationssignals korreliert. Dabei wird vorteilhafterweise das Digitalsignal mit sich selbst (Auto-Korrelation) oder mit einem vorbestimmten Signal (Kreuz-Korrelation) korreliert. Das Korrelationssignal ist ein Ausgangssignal der Korrelation und gibt ein Maß der Übereinstimmung an.

Das Korrelationssignal wird mit einer Schwelle verglichen. Vorzugsweise ist die Schwelle dabei ein konstanter Schwellwert, der vorteilhafterweise programmierbar ist.

Die Umschaltung für einen Datenempfang in einer aktuellen Schaltposition wird angehalten, wenn das Korrelationssignal die Schwelle überschreitet. Daher wird der Signalpfad von derjenigen Antenne in der Schaltposition einer Schaltvorrichtung festgehalten, in der das Korrelationssignal genau dieser Antenne die Schwelle überschreitet.

Der Erfindung liegt weiterhin die Aufgabe zu Grunde eine Empfängerschaltung eines Funknetzes möglichst zu verbessern.

Diese Aufgabe wird durch eine Empfängerschaltung mit den Merkmalen des unabhängigen Anspruchs 8 gelöst. Vorteilhafte Weiterbildungen sind Gegenstand von abhängigen Ansprüchen und in der Beschreibung enthalten.

Demzufolge ist eine Empfängerschaltung eines Funknetzes vorgesehen. Die Empfängerschaltung weist einen ersten Eingang, der zum Empfang eines ersten Signals mit einer ersten Antenne verbindbar ist, und einen zweiten Eingang, der zum Empfang eines zweiten Signals mit einer zweiten Antenne verbindbar ist, auf. Bevorzugt sind der erste Eingang und der zweite Eingang Anschlüsse eines monolithisch integrierten Schaltkreises.

Vorzugsweise weist die Empfängerschaltung eine Schaltvorrichtung auf, die zur Umschaltung zwischen dem ersten Signal und dem zweiten Signal mit dem ersten Eingang und dem zweiten Eingang mittelbar oder unmittelbar verbunden ist, so dass das erste Signal und das zweite Signal über eine jeweilige Verbindung zur Schaltvorrichtung gelangen. Zur unmittelbaren Verbindung ist vorteilhafterweise ein elektrischer Leiter zwischen dem Eingang und der Schaltvorrichtung ausgebildet. Alternativ ist es prinzipiell möglich für eine mittelbare Verbindung zwischen jedem Eingang und der Schaltvorrichtung jeweils einen Verstärker oder einen Filter vorzusehen.

Vorzugsweise weist die Empfängerschaltung einen Analog-Digital-Umsetzer auf, der je nach Schaltposition zur Umsetzung des ersten Signals beziehungsweise des zweiten Signals in ein Digitalsignal ausgebildet ist. Dabei wird das jeweils gerade von der Schaltvorrichtung durchgeschaltete Signal umgesetzt.

Vorzugsweise weist die Empfängerschaltung eine Synchronisationsvorrichtung auf, die ausgebildet ist das Digitalsignal zur Ausgabe eines Korrelationssignals zu korrelieren.

Vorzugsweise weist die Empfängerschaltung einen digitalen Vergleicher auf, der ausgebildet ist, das Korrelationssignal mit einer Schwelle zu vergleichen.

Die Schwelle ist vorteilhafterweise als Registerwert programmierbar. Alternativ kann die Schwelle berechnet werden oder ist als fester Wert unveränderlich.

Vorzugsweise weist die Empfängerschaltung eine Kontrollschaltung auf, die mit der Schaltvorrichtung und dem Vergleicher verbunden ist. Vorzugsweise ist die Kontrollschaltung ausgebildet die Schaltvorrichtung zur fortlaufenden Umschaltung zwischen dem ersten Signal und dem zweiten Signal zu steuern. Bevorzugt ist die Kontrollschaltung ausgebildet die Umschaltung anzuhalten, wenn das Korrelationssignal die Schwelle überschreitet.

Vorzugsweise sind die Schaltvorrichtung, der Analog-Digital-Umsetzer, die Synchronisationsvorrichtung, der Vergleicher und die Kontrollschaltung auf einem Halbleiterchip monolithisch integriert.

Vorzugsweise ist die Empfängerschaltung zur Durchführung des zuvor erläuterten Verfahrens ausgebildet und eingerichtet.

Der Erfindung liegt weiterhin die Aufgabe zu Grunde, eine Verwendung anzugeben.

Diese Aufgabe wird durch eine Verwendung mit den Merkmalen des unabhängigen Anspruchs 10 gelöst. Vorteilhafte Weiterbildungen sind Gegenstand von abhängigen Ansprüchen und in der Beschreibung angegeben.

Demzufolge ist eine Verwendung einer Synchronisationsvorrichtung und eines Vergleichers einer Empfängerschaltung eines Funknetzes vorgesehen. Die Synchronisationsvorrichtung und der Vergleicher werden zum Vergleich eines Ergebnisses einer Korrelation mit einer Schwelle und zum Anhalten einer fortlaufenden Umschaltung zwischen zumindest zwei Signalen unterschiedlicher Antennen verwendet. Dabei erfolgt das Anhalten der fortlaufenden Umschaltung, wenn das Ergebnis der Korrelation die Schwelle überschreitet.

Die im Folgenden beschriebenen Weiterbildungen beziehen sich sowohl auf die Empfängerschaltung, als auch auf die Verwendung als auch auf das Verfahren zum Empfang. Vorteilhafterweise ist die Empfängerschaltung dabei für die Verfahrensschritte ausgebildet und eingerichtet.

In einer vorteilhaften Ausgestaltung wird eine Präambel übertragen, die in der Empfängerschaltung der Korrelation dient. Bevorzugt ist eine Zeitdauer zwischen zwei Umschaltungen kürzer als eine Übertragungsdauer der Präambel. Besonders bevorzugt ist die Zeitdauer zwischen zwei Umschaltungen kürzer als die Hälfte der Übertragungsdauer der Präambel.

Gemäß einer vorteilhaften Weiterbildung erfolgt die Umschaltung zyklisch. Die Zeitabstände zwischen zwei Umschaltungen sind während des zyklischen Umschaltens vorzugsweise äquidistant. Unter bestimmten Voraussetzungen kann von der zyklischen Umschaltung abgewichen werden.

Gemäß einer besonders vorteilhaften Weiterbildung wird eine Zeitdauer zwischen zwei Umschaltungen dann verlängert, wenn eine ermittelte aktuelle Empfangsleistung eine weitere Schwelle überschreitet. Die Empfangsleistung kann beispielsweise als Empfangsfeldstärke bestimmt werden. Die weitere Schwelle ist dabei vorzugsweise unabhängig einstellbar, insbesondere programmierbar. Dem liegt die Erkenntnis zu Grunde, dass die Wahrscheinlichkeit zum Empfang eines gültigen Signals dann steigt, wenn eine signifikant hohe Empfangsleistung eines empfangenen Signals vorliegt.

In einer vorteilhaften Weiterbildung wird die Umschaltung nach der Schwellenüberschreitung bis zu einer Ermittlung einer Vollständigkeit der übertragenen Daten angehalten. Die Vollständigkeit wird vorzugsweise dadurch ermittelt, dass ein Daten-Rahmen vollständig im Speicher geladen ist. Die Rahmenlänge wird vorteilhafterweise aus den Daten des Rahmens selbst ermittelt. Bevorzugt wird bei einer Vollständigkeit ein Steuersignal erzeugt und an die Kontrollschaltung zur Initiierung des Umschaltungsvorgangs angelegt.

Gemäß einer alternativen Weiterbildung, die auch mit einer Vollständigkeitsprüfung kombiniert werden kann, wird die Umschaltung nach der Schwellenüberschreitung in Abhängigkeit von einem Zeitschalter angehalten. Der Zeitschalter ist beispielsweise ein Timer oder ein Monoflop. Der Zeitschalter wird beispielsweise durch eine Gültigkeitsinformation (SFD) im Rahmen gestartet.

Vorzugsweise weist die Synchronisationsvorrichtung einen Korrelator zur Korrelation auf. Vorteilhafterweise ist der Korrelator ein Kreuzkorrelator oder ein Autokorrelator.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert.

Dabei zeigen
- Fig. 1: ein schematisches Ablaufdiagramm eines Verfahrens,
- Fig. 2: ein schematisches Blockschaltbild einer Empfängerschaltung,
- Fig. 3a: ein schematisches Diagramm zur Darstellung von Umschaltungen, und
- Fig. 3b: ein schematisches Diagramm eines zeitlichen Verlaufs eines Korrelationsergebnisses.

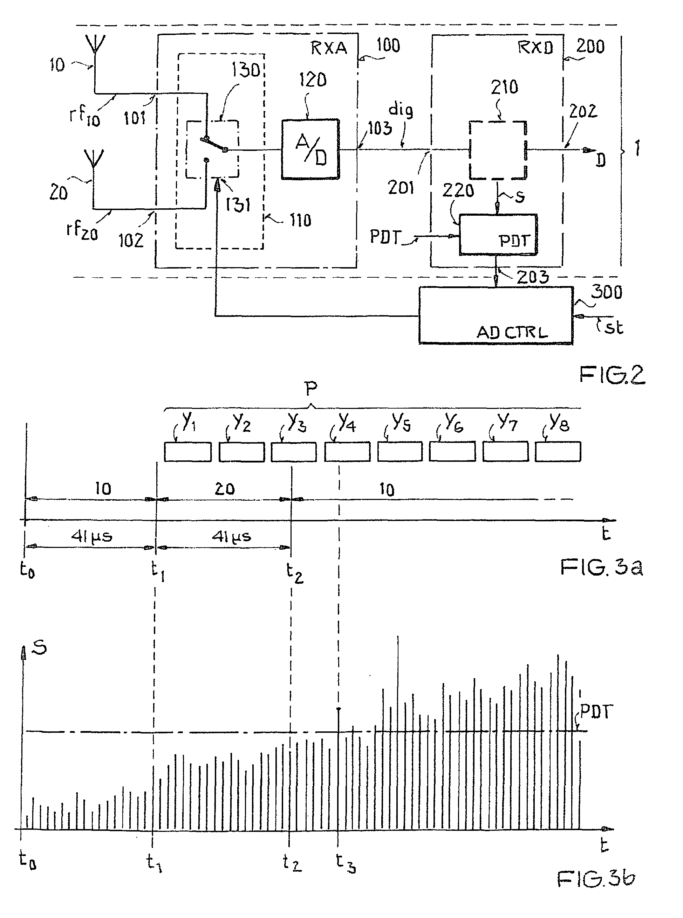

In Fig. 2 ist ein Blockschaltbild einer Empfängerschaltung eines Knotens eines Funknetzes schematisch dargestellt. Die Empfängerschaltung ist über einen ersten Eingang 101 mit einer ersten Antenne 10 und einen zweiten Eingang 102 mit einer zweiten Antenne 102 verbunden. Der erste Eingang 101 und der zweite Eingang 102 sind weiterhin mit einer Schaltvorrichtung 130 zur Umschaltung zwischen einem ersten Signal rf10, das über die erste Antenne 10 empfangbar ist, und einem zweiten Signal rf20, das über die zweite Antenne 20 empfangbar ist, verbunden. Die Schaltvorrichtung 130 kann einen oder mehrere Schalttransistoren zur Ausbildung der Schaltfunktion aufweisen. Die Schaltvorrichtung 130 ist dabei Bestandteil einer analogen Teilschaltung 110, die für weitere analoge Funktionen, wie eine Verstärkung oder Filterung ausgebildet ist.

Das von der Schaltvorrichtung 130 ausgegebene Signal gelangt als Eingangssignal zu einem Analog-Digital-Umsetzer (A/D) 120, der das Eingangssignal in ein Digitalsignal dig umsetzt und am Ausgang 103 ausgibt. Der analoge Teilschaltkreis 110 und der Analog-Digital-Umsetzer (A/D) 120 sind Bestandteil einer Eingangsschaltung (RXA) 100 der Empfängerschaltung. Der Eingangsschaltung 100 ist eine digitale Auswerteschaltung (RXD) 200 im Empfangspfad 1 nachgeschaltet. Die digitale Auswerteschaltung 200 weist einen Korrelator 210 und einen digitalen Vergleicher 220 auf. Zusätzlich kann die Auswerteschaltung eine Vielzahl weitere Schaltungen aufweisen, die in Fig. 2 für eine vereinfachte Darstellung nicht gezeigt sind.

Das Digitalsignal dig wird im Korrelator 210, der beispielsweise ein AutoKorrelator oder ein Kreuz-Korrelator ist, korreliert, wobei der Korrelator 210 in Abhängigkeit von der Korrelation ein Korrelationssignal s ausgibt. Das Korrelationssignal s ist dabei beispielsweise ein Maß für die ermittelte Übereinstimmung. Das Korrelationssignal s wird im digitalen Vergleicher 220 mit der Schwelle PDT verglichen, die fest oder programmierbar oder berechnet sein kann. Ein Ausgang 203 des Vergleichers 220 ist mit einem Eingang einer Kontrollschaltung 300 verbunden. Die Kontrollschaltung 300 ist dabei ausgebildet, die Umschaltung durch die Schaltvorrichtung 130 mittels eines Schaltsignals an einem Schalteingang 131 zu steuern, indem ein Ausgang der Kontrollschaltung 300 mit dem Schalteingang 131 der Schaltvorrichtung 130 verbunden ist.

Die digitale Auswerteschaltung 200 weist einen mit dem Korrelator 210 verbundenen Ausgang 202 zur Ausgabe von Daten D eines Rahmens auf, der in einem in Fig. 2 nicht dargestellten Speicher gespeichert wird. Zusätzlich können Überprüfungsmittel (in Fig. 2 nicht dargestellt) vorgesehen sein, die im Falle der vollständigen Speicherung der Daten D eines Rahmens ein Steuersignal st generieren und an einen Eingang der Kontrollschaltung 300 ausgeben.

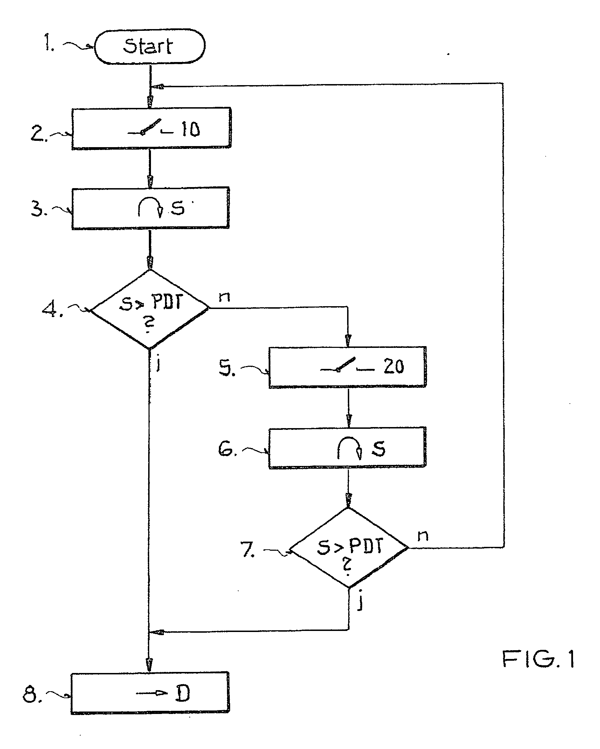

Ein möglicher Verfahrensablauf wird nachfolgend anhand des schematischen Ablaufdiagramms des Ausführungsbeispiels der Fig. 1 näher erläutert. In einem 1. Schritt wird der Ablauf gestartet. Im 2. Schritt schaltet die Schaltvorrichtung 130 auf die erste Antenne 10 um, so dass das erste Signal rf10 als Eingangsignal vom Analog-Digital-Umsetzer 120 in das Digitalsignal dig umgesetzt wird. Das Digitalsignal dig wird im 3. Schritt zur Ausgabe eines Korrelationssignals s korreliert.

Im 4. Schritt wird das Korrelationssignal s mit einer Schwelle PDT für eine bestimmte Zeitdauer, beispielsweise von weniger als 50 µs, verglichen. Überschreitet das Korrelationssignal s während dieser Zeitdauer die Schwelle PDT nicht, wird im 5. Schritt durch die Schaltvorrichtung 130 auf die zweite Antenne 20 umgeschaltet. Dies bewirkt, dass das zweite Signal rf20 als Eingangsignal vom Analog-Digital-Umsetzer 120 in das Digitalsignal dig umgesetzt wird. Das von der zweiten Antenne 20 stammende Digitalsignal dig wird im 6. Schritt zur Ausgabe des Korrelationssignals s korreliert. Im 7. Schritt wird wiederum das Korrelationssignal s mit der Schwelle PDT für die bestimmte Zeitdauer, beispielsweise von weniger als 60 µs, verglichen. Unterschreitet das Korrelationssignal s während dieser Zeitdauer die Schwelle PDT wird erneut im 2. Schritt durch die Schaltvorrichtung 130 auf die erste Antenne 10 umgeschaltet. Die Schritte 2 bis 7 bewirken daher eine fortlaufende Umschaltung zwischen der ersten Antenne 10 und der zweiten Antenne 20, sofern das Korrelationssignal s die Schwelle PDT nicht überschreitet.

Wird im 4. Schritt die Schwelle PDT von dem Korrelationssignal s überschritten wird die Umschaltung angehalten und das Verfahren im 8. Schritt mit der Schaltposition zur ersten Antenne 10 fortgesetzt. Dabei werden Daten D empfangen. Ist ein Rahmen mit den Daten D vollständig empfangen und in einen Speicher geladen, wird der Ablauf im 2. oder 5. Schritt fortgesetzt (in Fig. 1 nicht dargestellt). Ähnlich verhält es sich, wenn im 5. Schritt die Schwelle PDT vom Korrelationssignal s überschritten wird. Dabei wird das Verfahren im 8. Schritt mit der Schaltposition zur zweiten Antenne 20 fortgesetzt. Dabei werden wiederum Daten D empfangen. Ist ein Rahmen mit den Daten D wiederum vollständig empfangen und in einen Speicher geladen, wird der Ablauf im 2. oder 5. Schritt fortgesetzt (in Fig. 1 nicht dargestellt).

Zur Korrelation wird eine Präambel übertragen. Die Zeitdauer zwischen zwei Umschaltungen soll dabei kürzer als eine Übertragungsdauer der Präambel sein. Vorteilhafterweise ist die Zeitdauer zwischen zwei Umschaltungen kürzer als die Hälfte der Übertragungsdauer der Präambel. Die Zeitdauer zwischen zwei Umschaltungen kann unterschiedlich sein oder von anderen Parametern oder Messwerten abhängen.

Ein Beispiel mit einer Zeitdauer von 41 µs zwischen zwei Umschaltungen ist in den Figuren 3a und 3b schematisch dargestellt. Zwischen den Zeitpunkten t0 und t1 ist die Schaltvorrichtung 130 für 41 µs in eine zur ersten Antenne 10 korrespondierende Schaltposition gesteuert. Zwischen den Zeitpunkten t1 und t2 ist die Schaltvorrichtung 130 für weitere 41 µs in eine zur zweiten Antenne 20 korrespondierende Schaltposition gesteuert. Dementsprechend wird im dem Ausführungsbeispiel der Figuren 3a und 3b zyklisch mit einer Zeitdauer von 41 µs umgeschaltet.

Kurz nach dem Zeitpunkt t1 der Umschaltung wird eine Präambel P von einem anderen Knoten gesendet. Die Präambel umfasst im Ausführungsbeispiel der Fig. 3a acht Symbole y1, y2, y3, y4, y5, y6, y7 und y8. Der Beginn der Übertragung der Präambel P ist aufgrund der Unabhängigkeit des sendenden Knotens und des empfangenden Knotens des Funknetzes nicht zu den Umschaltzeitpunkten t0, t1 oder t2 synchronisiert, sondern ist völlig zufällig. Die Zeitdauer von 41 µs zwischen zwei Umschaltzeitpunkten (t1 und t2) ist dabei kürzer als die Übertragungsdauer von drei Symbolen, dementsprechend kürzer als dreiachtel der Übertragungsdauer der Präambel P.

In Fig. 3b ist der zeitliche Verlauf des Korrelationssignals s in Beziehung zu den in Fig. 3a dargestellten Umschaltungszeitpunkten schematisch dargestellt. Die Darstellung des Korrelationssignals s beginnt zum Zeitpunkt t0 bis zum Zeitpunkt t1 überschreitet das des Korrelationssignal s nicht die Schwelle PDT. Demzufolge wird die Umschaltung nicht angehalten und zum nächsten Umschaltzeitpunkt t1 wird von der ersten Antenne 10 auf die zweite Antenne 20 umgeschaltet. Zwar beginnt nach dem Zeitpunkt t2 die Übertragung der Präambel, jedoch ist die zweite Antenne 20 nicht derart ausgerichtet, dass das Korrelationssignal s während des Empfangs durch die zweite Antenne 20 die Schwelle PDT überschreitet.

Erst nach der erneuten Umschaltung im Zeitpunkt t2 auf die erste Antenne 10 überschreitet das Korrelationssignal s zum Zeitpunkt t3 die Schwelle PDT. Die Umschaltung wird in diesem Moment angehalten, so dass die Schaltposition für die erste Antenne 10 bis zu einer Abbruchbedingung festgelegt ist. Eine derartige Abbruchbedingung ist beispielsweise ein Zeitschaltersignal oder ein vollständiges Laden der Daten D eines Rahmens in einen Speicher.

Die Erfindung ist nicht auf die dargestellten Ausgestaltungsvarianten der Figuren 1 bis 3b beschränkt. Beispielsweise ist es möglich einen anderen Zyklus mit beispielsweise mehr als 41 µs zwischen zwei Umschaltungen vorzusehen. Auch ist es möglich die Zeitdauer zwischen zwei Umschaltungen an eine Empfangsfeldstärke der jeweiligen Antenne 10, 20 anzupassen. Die Funktionalität der Empfängerschaltung gemäß Fig. 2 oder des Verfahrens gemäß Fig. 1 kann besonders vorteilhaft für ein Funknetz des Industrie-Standards IEEE 802.15.4 verwendet werden.

### Bezugszeichenliste

- 10,20: Antenne
- 100, RXA: analog-digitale Eingangsschaltung
- 110: analoge Teilschaltung
- 101, 102: Eingang
- 103: Ausgang
- 120: Analog-Digital-Umsetzer
- 130: Schaltvorrichtung
- 131: Steuereingang
- 200, RXD: Digitalschaltung
- 201: Eingang
- 202,203: Ausgang
- 210: Korrelator, Synchronisator
- 220: digitaler Vergleicher
- 300, ADCTRL: Kontrollschaltung
- rf10, rf20: Signal
- dig: Digitalsignal
- D: Daten
- P: Präambel
- PDT: Schwelle, Schwellwert
- s: Korrelationssignal
- st: Steuersignal
- t: Zeit
- t0, t1, t2, t3: Zeitpunkt
- y1 bis y8: Symbol der Präambel

## Patentansprüche

1. Verfahren zum Empfang in einem Funknetz,
- bei dem zwischen einem ersten Signal (rf10), das über eine erste Antenne (10) empfangen wird, und einem zweiten Signal (rf20), das über eine zweite Antenne (20) empfangen wird, zur Bildung eines Eingangssignals fortlaufend umgeschaltet wird,
- bei dem das Eingangssignal analog-digital in ein Digitalsignal (dig) umgesetzt wird,
- bei dem das Digitalsignal (dig) zur Ausgabe eines Korrelationssignals (s) korreliert wird,
- bei dem das Korrelationssignal (s) mit einer Schwelle (PDT) verglichen wird, und
- bei dem die Umschaltung für einen Datenempfang in einer aktuellen Schaltposition angehalten wird, wenn das Korrelationssignal (s) die Schwelle (PDT) überschreitet.

2. Verfahren nach Anspruch 1,
- bei dem zur Korrelation eine Präambel (P) übertragen wird, und
- bei dem eine Zeitdauer zwischen zwei Umschaltungen kürzer als eine Übertragungsdauer der Präambel (P) ist.

3. Verfahren nach Anspruch 2, bei dem die Zeitdauer zwischen zwei Umschaltungen kürzer als die Hälfte der Übertragungsdauer der Präambel (P) ist.

4. Verfahren nach einem der vorhergehenden Ansprüche, bei dem die Umschaltung zyklisch erfolgt.

5. Verfahren nach einem der vorhergehenden Ansprüche, bei dem eine Zeitdauer zwischen zwei Umschaltungen verlängert wird, wenn eine ermittelte Empfangsleistung eine weitere Schwelle überschreitet.

6. Verfahren nach einem der vorhergehenden Ansprüche, bei dem die Umschaltung nach der Schwellenüberschreitung bis zu einer Ermittlung einer Vollständigkeit der übertragenen Daten angehalten wird.

7. Verfahren nach einem der vorhergehenden Ansprüche, bei dem die Umschaltung nach der Schwellenüberschreitung in Abhängigkeit von einem Zeitschalter angehalten wird.

8. Empfängerschaltung eines Funknetzes,
- mit einem ersten Eingang (101), der zum Empfang eines ersten Signals (rf10) mit einer ersten Antenne (10) verbindbar ist,
- mit einem zweiten Eingang (102), der zum Empfang eines zweiten Signals (rf20) mit einer zweiten Antenne (20) verbindbar ist,
- mit einer Schaltvorrichtung (130), die verbunden ist zur Umschaltung zwischen dem ersten Signal (rf10) und dem zweiten Signal (rf20),
- mit einem Analog-Digital-Umsetzer (120) zur Umsetzung des ersten Signals (rf10) beziehungsweise des zweiten Signals (rf20) (jeweils das gerade durchgeschaltete Signal) in ein Digitalsignal (dig),
- mit einer Synchronisationsvorrichtung (210), die ausgebildet ist das Digitalsignal (dig) zur Ausgabe eines Korrelationssignals (s) zu korrelieren,
- mit einem Vergleicher (220), der ausgebildet ist, das Korrelationssignal (s) mit einer Schwelle (PDT) zu vergleichen, und
- mit einer Kontrollschaltung (300), die mit der Schaltvorrichtung (130) und dem Vergleicher (220) verbunden ist.

9. Empfängerschaltung nach Anspruch 8, bei der die Synchronisationsvorrichtung (210) einen Korrelator - insbesondere einen Kreuzkorrelator oder einen Autokorrelator - zur Korrelation aufweist.

10. Verwendung einer Synchronisationsvorrichtung (210) und eines Vergleichers (220) einer Empfängerschaltung eines Funknetzes zum Vergleich eines Ergebnisses (s) einer Korrelation mit einer Schwelle (PDT) und zum Anhalten einer fortlaufenden Umschaltung zwischen zumindest zwei Signalen (rf10, rf20) unterschiedlicher Antennen (10, 20), wenn das Ergebnis (s) der Korrelation die Schwelle (PDT) überschreitet.
